# EUROPÄISCHE PATENTANMELDUNG

(11) **EP 3 974 379 A1**
(43) Veröffentlichungstag der Anmeldung: **30.03.2022**
(21) Anmeldenummer: 20020426.1
(22) Anmeldetag: 23.09.2020
(51) Int. Cl.: C01B 3/38, C01B 3/48, B01D 53/047

(54) **VERFAHREN ZUM HERSTELLEN VON REINWASSERSTOFF MIT NIEDRIGEM DAMPFEXPORT**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Shrivastava, Swatantra, D-60439 Frankfurt am Main (DE); Ulber, Dieter, D-60439 Frankfurt am Main (DE); Hübel, Mirko, D-60439 Frankfurt am Main (DE)
(74) Vertreter: Dropsch, Holger

(57) **Zusammenfassung**

Es wird ein Verfahren zum Herstellen von Reinwasserstoff durch Dampfreformieren eines Kohlenwasserstoffe enthaltenden Einsatzgases, vorzugsweise Erdgas oder Naphtha, bei gleichzeitig niedrigem und vorzugsweise einstellbarem Exportdampf-Mengenstrom vorgeschlagen. Das Verfahren umfasst das Dampfreformieren des Einsatzgases, wobei die hierfür erforderliche Reaktionswärme durch Verbrennen eines oder mehrerer Brenngase mit Verbrennungsluft in einer Vielzahl von im Reformerofen angeordneten Brennern erfolgt. Erfindungsgemäß wird die Verbrennungsluft vor Einleiten in die Brenner mittels mindestens eines Wärmetauschers im indirekten Wärmetausch mit dem heißen Rauchgas auf Temperaturen von mindestens 530 °C aufgeheizt.

## Beschreibung

### Gebiet der Erfindung

Die Erfindung betrifft ein Verfahren zum Herstellen von Reinwasserstoff durch Dampfreformieren eines Kohlenwasserstoffe, vorzugsweise Erdgas oder Naphtha, enthaltenden Einsatzgases bei gleichzeitig niedrigem und vorzugsweise einstellbarem Mengenstrom des Exportdampfs, der als Sekundärprodukt bei der Dampfreformierung von Kohlenwasserstoffen erhalten wird.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release und 6. Auflage 2003, Stichwort "Gas Production", ausgeführt wird, ist diese sogenannte Dampfreformierung (Steamreforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas (Steam Methane Reforming, SMR) dominierend. Diese verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Als Brennstoff dient ein Teil des Einsatzgases und/oder bei der Produktaufarbeitung erhaltene, brennbare Komponenten enthaltende Nebenproduktströme. Dabei erfolgt der Wärmeübergang auf die Reformerrohre durch Wärmestrahlung und konvektive Wärmeübertragung von den heißen Rauchgasen, die bei der Verbrennung in den Brennern erhalten werden.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis, die beispielsweise als Schüttung von Formkörpern in die Reformerrohre eingebracht werden. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf.

Zur Energieoptimierung und/oder bei Einsatzstoffen mit höheren Kohlenwasserstoffen kann dem oben beschriebenen Reformierungsverfahren, das im Folgenden synonym auch als Hauptreformierung bezeichnet wird, ein sogenannter Vorreformer (Prereformer) zur Vorspaltung des Einsatzstoffes vorgeschaltet werden. Unter der Vorreformierung (Prereforming) wird zumeist die Anwendung eines Tieftemperatur-Reformierungsschrittes verstanden, der stromaufwärts eines konventionellen, mit Erdgas betriebenen Hauptreformers, beispielsweise eines Steamreformers, angeordnet ist. Im Gegensatz zur Dampfreformierungsreaktion wird bei der Vorreformierung das Reaktionsgleichgewicht bei weitaus geringeren Temperaturen eingestellt. Das hauptsächliche Merkmal der Vorreformierung ist die Umsetzung der höheren Kohlenwasserstoffe im Einsatzgemisch zu Methan sowie teilweise zu Synthesegasbestandteilen. Häufig wird als Reaktortyp für die Vorreformierung ein einfacher, mit speziellem Vorreformierungskatalysator gefüllter, adiabat betriebener Schachtreaktor verwendet, der sich somit auch hinsichtlich seiner Konstruktion deutlich von dem allotherm betriebenen und eine Vielzahl von Reformerrohren aufweisenden Hauptreformer unterscheidet.

Da im Prereformer praktisch alle höheren Kohlenwasserstoffe, die im als Einsatz verwendeten Erdgas vorhanden sind, zu Methan und Synthesegasbestandteilen umgesetzt werden, wird das Risiko der Bildung von Koksablagerungen im Hauptreformer erheblich verringert. Dies gestattet das Herabsetzen des Dampf/Kohlenstoff-Verhältnisses (S/C) und das Heraufsetzen der Wärmebelastung der Reformerrohre, was zu einem insgesamt geringeren Energieverbrauch und zur Verkleinerung der verwendeten Apparate führt.

Der Vorreformierungsstufe ist zumeist noch eine Entschwefelungsstufe vorgeschaltet, um Schwefelanteile des Einsatzstoffes zu entfernen, die als Katalysatorgift für die in den nachgeschalteten Reformern enthaltenen Katalysatoren wirken. Die Entschwefelung kann dabei rein adsorptiv, beispielsweise an Adsorbentien auf Basis von Zinkoxid erfolgen. Für einige Anwendungen wird die hydrierende Entschwefelung (Hydrodesulfurierung) bevorzugt, bei der der in organischen und anorganischen Schwefelkomponenten gebundene Schwefel in Gegenwart geeigneter Katalysatoren mittels Wasserstoff in Form von Schwefelwasserstoff freigesetzt und nachfolgend an Adsorbentien der oben beschriebenen Art gebunden wird. Die genannten Entschwefelungsmethoden werden daher oft in Kombination eingesetzt.

Das ggf. entschwefelte und vorreformierte Einsatzgas wird vor seinem Einleiten in die mit Reformierungskatalysator gefüllten Reformerrohre, die im Reformerofen des Hauptreformers angeordnet sind und mit Brennern beheizt werden, auf die Dampfreformierungseintrittstemperatur gebracht. Hierzu wird ein Einsatzgas-Überhitzer verwendet, der als mehrstufiger Wärmetauscher ausgestaltet ist, wobei sich die Wärmetauscherstufen beispielsweise als Rohrwicklungen, sogenannte Coils, im Abhitzeteil für das Brennerrauchgas des Reformerofens befinden.

Das heiße Synthesegas-Produktgas wird nach Verlassen des Reformerofens in einem oder mehreren Wärmetauschern im indirekten Wärmetausch gegen kalte Medien abgekühlt. Dabei können unter anderem aus wässrigen Kondensaten oder Reinwasser, beispielsweise Kesselspeisewasser, Dampfströme unterschiedlicher Qualität gewonnen werden.

Das teilabgekühlte Rohsynthesegas durchläuft anschließend noch weitere Konditionierungsschritte, die von der Art des gewünschten Produktes oder des nachgeschalteten Verfahrens anhängig sind. Wird auf die Erzeugung von Reinwasserstoff abgestellt, gehören hierzu typischerweise eine CO-Konvertierungsanlage zur Umsetzung von Kohlenmonoxid im Rohsynthesegas mit Wasserdampf zu weiterem Wasserstoff und Kohlendioxid (auch als CO-Shift- oder Wassergas-Shift-(WGS)-Anlage bezeichnet), eine Kohlendioxid-Entfernungsvorrichtung, beispielsweise durch Gaswäsche mit tiefkaltem Methanol nach dem Rectisol-Verfahren, und schließlich eine Vorrichtung zur Druckwechseladsorption (PSA), die Reinwasserstoff als Endprodukt liefert.

Dampfreformierungsanlagen erzeugen somit in effizienter Weise neben dem Hauptprodukt Synthesegas oder seine Bestandteile, beispielsweise Reinwasserstoff, auch einen unter Umständen aus mehreren Teildampfströmen bestehenden Produktdampfstrom als Nebenprodukt, der ganz oder teilweise als Exportdampf an externe Verbraucher abgegeben wird. Dabei sind die Verbraucher des Hauptprodukts oft nicht identisch mit den Abnehmern des Exportdampfes oder können nur kleine Mengen desselben aufnehmen. Somit können Diskrepanzen zwischen der Synthesegas-Produktion und der Abnahme des Exportdampfes auftreten, da die Produktionsraten der beiden Produkte Synthesegas und Produktdampf aneinander gekoppelt sind und die Produktionsrate des Exportdampfes beim herkömmlichen Dampfreformierungsverfahren nur in sehr geringem Maße angepasst werden kann. Andererseits kann insbesondere beim Teillastbetrieb des Dampfreformers die externen Verbrauchern zugesagte Exportdampfmenge unter Umständen nicht eingehalten werden. Ferner kann es wünschenswert sein, die abzugebende Exportdampfmenge zeitweilig abzusenken, wenn beispielsweise Betriebsstillstände oder Teillastfahrweise von Abnahmebetrieben auftreten.

Im Falle einer primären oder ausschließlichen Erzeugung von Reinwasserstoff durch Dampfreformierung wird zu Vergleichszwecken oft das Verhältnis von erzeugtem Exportdampf zu erzeugtem Wasserstoff als kg Dampf pro Normkubikmeter Wasserstoff angegeben.

Im Stand der Technik sind daher bereits Verfahren zur Dampfreformierung von Methan beschrieben worden, bei denen versucht wurde, eine Entkopplung der Exportdampf-produktion von der Synthesegasproduktion zu erreichen. So beschreibt die europäische Patentanmeldung EP 2103568 A2 ein Verfahren zur Dampfreformierung von Methan, bei dem praktisch kein Exportdampf an externe Verbraucher abgegeben wird. Erreicht wird dies dadurch, dass einerseits praktisch der gesamte produzierte Dampf im Reformierungsprozess selbst verbraucht wird. Andererseits wird die Dampferzeugung unter anderem dadurch minimiert, dass bei der Brennstoff im Reformerofen mittels sauerstoffangereicherter Luft verbrannt wird, wodurch sich der für den indirekten Wärmetausch mit Wasser-/Dampfströmen zur Verfügung stehende Massenstrom heißer Verbrennungsabgase verringert. Ferner wird vorgeschlagen, die im indirekten Wärmetausch gegen heißes Synthesegas-Produktgas bzw. heiße Verbrennungsabgase übertragene Wärmemenge für die Überhitzung eines Dampfstromes zu verwenden, der nachfolgend in einer Dampfturbine zur Energieerzeugung genutzt wird. Die hierbei gewonnene Energie kann dann wiederum zur Sauerstofferzeugung oder Sauerstoffanreicherung der Verbrennungsluft eingesetzt werden. Nachteilig ist hierbei das aufwändige Anlagenkonzept.

Ein ähnlicher Ansatz zur Minimierung des Dampfexports wird in der Patentveröffentlichung EP 2103569 A2 verfolgt. Neben dem weitgehend vollständigen Verbrauch des erzeugten Dampfes innerhalb des Reformers wird das Synthesegas-Produktgas nach Abkühlung einer Druckwechsel-Adsorption zugeführt, in der Kohlendioxid abgetrennt wird. Das erhaltene, an Wasserstoff angereicherte und daher bezügliche seines Heizwertes erhöhte Produktgas der Druckwechsel-Adsorption wird teilweise zum Reformerofen zurückgeführt und dort als Brennstoff eingesetzt. Dies ist von Nachteil, da das aufwändig erzeugte, hochwertige Produkt Wasserstoff durch Verbrennen lediglich thermisch genutzt wird.

Die europäische Patentschrift EP 2512981 B1 beschreibt ein Verfahren zur Dampfreformierung eines kohlenwasserstoffhaltigen Einsatzes. Hierbei wird ein Teil des Rauchgases nach Verlassen des Abhitzeteils des Reformerofens und vor Eintritt in die Rauchgasentsorgung abgezweigt und zum Reformerofen zurückgeführt. Durch Variation des Anteils des zurückgeführten Rauchgases kann die an externe Verbraucher abgegebene Exportdampfmenge in einem weiten Bereich variiert werden. Hierdurch kann die Exportdampfmenge auch bei Teillastbetrieb des Reformers konstant gehalten werden. Alternativ ist bei Volllastbetrieb des Reformers eine Absenkung oder weitere Steigerung der Exportdampfmenge durch entsprechende Änderung des zurückgeführten Rauchgas-Massenstroms möglich.

Trotz der beschriebenen Ansätze des Stand der Technik besteht weiterhin Bedarf an einem Verfahren zur Dampfreformierung von Kohlenwasserstoffen, das auf die Herstellung von Reinwasserstoff gerichtet ist und das es gleichzeitig ermöglicht, einen niedrigen und vorzugsweise einstellbaren Mengenstrom an Exportdampf zu erzeugen. Nicht immer ist beispielweise ein Rückführung von Rauchgasen erwünscht oder technisch möglich.

### Beschreibung der Erfindung

Die Aufgabe der vorliegenden Erfindung besteht daher darin, ein solches Verfahren anzugeben. Diese Aufgabe wird in einem ersten Aspekt durch ein Verfahren mit den Merkmalen des Anspruchs 1 gelöst. Weitere Ausgestaltungen der Erfindung ergeben sich aus den anhängigen Verfahrensansprüchen.

Die Vorreformierungsbedingungen, Dampfreformierungsbedingungen und CO-Konvertierungsbedingungen sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von höheren Kohlenwasserstoffen zu niedrigen Kohlenwasserstoffen, vor allem Methan /Vorreformierung) bzw. von Kohlenwasserstoffen zu Synthesegasprodukten (Dampfreformierung bzw. Hauptreformierung) bzw. von Kohlenmonoxid mit Wasserdampf zu Kohlendioxid und Wasserstoff (CO-Konvertierung, CO-Shift) erzielt wird.

Im Falle der Dampfreformierungsbedingungen zählen hierzu als wichtige Parameter das Einstellen einer geeigneten Dampfreformierungseintrittstemperatur von typischerweise rund 1000 °C und die Zugabe von Dampf zu dem Kohlenwasserstoffe enthaltenden Einsatzgas und somit das Einstellen eines Dampf/Kohlenstoff-Verhältnisses (S/C-Verhältnis). Typische Werte für das S/C-Verhältnis liegen zwischen 1,5 und 3,5 mol/mol. Notwendige Anpassungen dieser Bedingungen an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Unter der Angabe, dass die Reformerrohre keine Wärmerückgewinnungsvorrichtung, insbesondere keinen internen Wärmetauscher umfassen, ist zu verstehen, dass das Einsatzgas bzw. Produktgas die Reformerrohre im geraden Durchgang durchströmt und sodann aus diesen ausgeleitet wird, ohne dass eine Umlenkung der Gasströmung und ein Einleiten in einen im Reformerrohr oder direkt, also unter Herstellung physischen Kontakts, am Reformerrohr angeordneten Wärmetauscher erfolgt, mit dessen Hilfe Wärme durch indirekten Wärmetausch auf die in das Reformerrohr eintretende Gasströmung erfolgt, wie es beispielsweise in der Patentschrift EP 2776365 B1 vorgeschlagen wird.

Die Angabe, dass ein Stoffstrom direkt einer spezifischen Verfahrensstufe oder einem spezifischen Anlagenteil zugeführt wird, ist so zu verstehen, dass der Stoffstrom in diese Verfahrensstufe oder diesen Anlagenteil eingeleitet wird, ohne dass zuvor ein Durchleiten durch andere Verfahrensstufen oder Anlagenteile erfolgte, mit Ausnahme reiner Transportvorgänge und der dazu benötigten Mittel, beispielsweise Rohrleitungen, Ventile, Pumpen, Verdichter, Vorratsbehälter.

Alle etwaigen Druckangaben erfolgen als Absolutdruckeinheiten, abgekürzt bara, oder als Überdruckeinheiten, abgekürzt barg, wenn im jeweiligen Einzelzusammenhang nichts anderes angegeben wird.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, direkt von dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt von dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Für die Zwecke dieser Beschreibung ist Dampf synonym mit Wasserdampf zu verstehen, sofern es nicht im Einzelfall anders angegeben wird. Die Angabe "Wasser" bezieht sich dagegen auf Wasser im flüssigen Aggregatzustand, soweit nicht im Einzelfall anders angegeben.

Mit Wärmeaustauschbeziehung ist die Möglichkeit des Wärmeaustauschs oder der Wärmeübertragung zwischen zwei Bereichen, beispielsweise der erfindungsgemäßen Vorrichtungen gemeint, wobei alle Mechanismen des Wärmeaustauschs oder der Wärmeübertragung wie Wärmeleitung, Wärmestrahlung oder konvektiver Wärmetransport zum Tragen kommen können. Unter einer indirekten Wärmeaustauschbeziehung wird dabei insbesondere die Art des Wärmeaustauschs oder der Wärmeübertragung verstanden, die durch eine Wand hindurch erfolgt (sog. Wärmedurchgang), der die Etappen des Wärmeübergangs von Fluid 1 auf die Oberfläche der Wand, der Wärmeleitung durch die Wand und des Wärmeübergangs von der Oberfläche der Wand auf Fluid 2 umfasst.

Unter einem weiteren Reinigungs-, Konditionierungs- oder Verarbeitungsschritt des Rohsynthesegases werden alle Maßnahmen und Verfahrensschritte verstanden, die zur Herstellung eines Reinsynthesegases, reinem Wasserstoff und/oder reinem Kohlenmonoxid aus dem Stand der Technik bekannt sind. Dazu zählen die CO-Konvertierung zur Erhöhung des Wasserstoffanteils im Synthesegas, die Abtrennung von Kohlendioxid mittels eines geeigneten Waschverfahrens wie beispielweise des Rectisol-Verfahrens oder die Wäsche mit aminhaltigen Waschmitteln, die kryogene Gaszerlegung zum Erzeugen von reinem Kohlenmonoxid, die Druckwechseladsorption (PSA) zum Erzeugen von Reinwasserstoff sowie physikalische Verfahrensschritte wie beispielsweise Abkühlen, Kondensieren, Abtrennen des Kondensats.

Zur Beheizung der Reformerrohre im Reformerofen kann außer rückgeführten, brennbaren Nebenproduktströmen der Dampfreformierungsanlage auch ein Anteil des Einsatzgases als Brenngas in den Brennern zur Wärmeerzeugung verbrannt werden. Der Anteil dieses sogenannten Trimmgases entspricht dem Heizwertanteil-Beitrag des Einsatzgases bezogen auf Gesamtheizwert des Brenngases. Er entspricht auch dem Anteil des Mengenstroms des Einsatzgases bezogen auf den Gesamtmengenstrom des Brenngas, korrigiert um die jeweiligen Heizwerte.

Der Erfindung liegt die Erkenntnis zugrunde, dass in einem Dampfreformierungsverfahren ein Teil der Enthalpie der heißen Rauchgase zur Vorwärmung der Verbrennungsluft auf höhere Temperaturen als aus dem Stand der Technik bekannt genutzt werden kann, anstatt diesen Enthalpieanteil dafür zu nutzen, in einem Abhitzekessel zusätzlichen Reindampf aus Kesselspeisewasser zu erzeugen, der dann als Exportdampf an externe Verbraucher abgegeben werden kann. Hierzu wird eine entsprechende Wärmetauscher-Rohrwicklung (sog. Wärmetauscher-Coil) in den Rauchgasweg des Reformerofens eingebracht. Auf diese Weise kann die Feuerungsleistung der Brenner verringert werden, wobei der sonstige Wärmehaushalt der Dampfreformierungsanlage unberührt bleibt und beispielsweise weiterhin ausreichende Enthalpiemengen zur Vorwärmung der übrigen Einsatzströme des Dampfreformierungsverfahrens, beispielsweise des Kohlenwasserstoffe enthaltenden Einsatzgases, weiterhin zur Verfügung stehen.

Im Sinne der Erfindung ist die Anwesenheit einer Vorreformierungsstufe (Prereformer) und deren Zusammenwirken mit den übrigen Anlagenteilen bzw. Verfahrensschritten besonders vorteilhaft und wirkt sich in doppelter Hinsicht günstig auf die beabsichtigte Reduzierung der Exportdampfmenge aus: Einerseits wird durch die Vorspaltung des Kohlenwasserstoffe enthaltenden Einsatzgases in einer externen, der Dampfreformierungsanlage stromaufwärts vorgelagerten Vorreformierungsstufe die Dampfreformierungsanlage als Hauptreformierungsstufe entlastet; folglich können die dort befindlichen Brenner mit geringerer Last bzw. Leistung betrieben werden. Andererseits wird die Vorwärmung des in die Vorreformierungsstufe eingeleiteten Einsatzgases wiederum über indirekten Wärmetausch mit den heißen Rauchgasen aus dem Reformerofen bewirkt, wofür wiederum ein eigenes Wärmetauscher-Coil vorgesehen wird. Beide Aspekte bewirken eine Verringerung der Enthalpie der heißen Rauchgase, so dass weniger Reindampf als Exportdampf produziert werden muss, um diese Enthalpie im gewünschten Maße abzuführen und somit zu reduzieren.

### Bevorzugte Ausgestaltungen der Erfindung

Ein zweiter Aspekt des erfindungsgemäßen Verfahrens ist dadurch gekennzeichnet, dass der Prereformer zwei Vorreformierungsstufen umfasst, wobei die einzelnen Stufen des Prereformers als Schachtreaktoren ausgestaltet sind, die mit einem für die Vorreformierung aktiven, festen Katalysator befüllt sind. Durch die zweistufige Vorspaltung bzw. Vorreformierung des Einsatzgases erfolgt in noch stärkerem Maße als bei einstufiger Vorreformierung eine Verlagerung der Dampfspaltung in die Vorreformierungsstufe und somit eine Entlastung der Hauptreformierungsstufe einerseits und Enthalpieabfuhr aus den heißen Rauchgasen aus dem Reformerofen andererseits. Hierdurch ist es möglich, für ein festgelegtes Verhältnis von erzeugtem Exportdampf zu erzeugtem Wasserstoff niedrigere Dampf-zu-Kohlenstoff-Verhältnisse im Einsatzgasgemisch für die Dampfreformierung einzustellen als bei einem lediglich einstufigem Prereformer. Andererseits kann für ein vorgegebenes Dampf-zu-Kohlenstoff-Verhältnis das Verhältnis von erzeugtem Exportdampf zu erzeugtem Wasserstoff weiter reduziert werden.

Ein dritter Aspekt des erfindungsgemäßen Verfahrens ist dadurch gekennzeichnet, dass die Reformerrohre in dem Reformerofen in Reihen angeordnet sind und dass die Brenner zwischen den Reformerrohr-Reihen und/oder zwischen den äußeren Reformerrohr-Reihen und den Innenwänden des Reformerofens angeordnet sind, wobei die Brenner so ausgerichtet sind, dass die Längsachse mindestens eines Teils der Brennerflammen parallel zur Längsachse der Reformerrohre verläuft. Hierdurch wird eine besonders günstige Wärmeübertragung von den Brennerflammen auf die Reformerrohre erreicht, da der Abstand der Brennerflammen zu den diese umgebenden Reformerrohre sowie die Länge der jeweiligen Strahlungszonen optimiert wird.

Ein vierter Aspekt des erfindungsgemäßen Verfahrens ist dadurch gekennzeichnet, dass die Reformerrohre keine Wärmerückgewinnungsvorrichtung, insbesondere keinen internen Wärmetauscher umfassen und im geraden Durchgang von dem vorreformierten Einsatzgas durchströmt werden. Insbesondere bei Dampfreformierungsverfahren, die solche klassischen Reformerrohre verwenden, weisen die Produktgase und Brennerrauchgase einen hohen Enthalpiegehalt auf, der üblicherweise in Form der Erzeugung hoher Exportdampfmengen genutzt wird. Daher ist es mit der Erfindung hier besonders wirkungsvoll möglich, die Exportdampfmenge zu reduzieren.

Ein fünfter Aspekt des erfindungsgemäßen Verfahrens ist dadurch gekennzeichnet, dass die Wasserstofferzeugungsanlage eine Entschwefelungsstufe umfasst.

Ein sechster Aspekt des erfindungsgemäßen Verfahrens ist dadurch gekennzeichnet, dass die Wasserstoffreinigungsanlage mindestens eine Vorrichtung umfasst, die aus der folgenden Gruppe ausgewählt ist:
- Kohlendioxid-Entfernungsvorrichtung
- Vorrichtung zur kryogenen Gaszerlegung
- Vorrichtung zur Druckwechseladsorption (PSA)
Die genannten Vorrichtungen und die durch sie realisierten Verfahren sind bei der Aufarbeitung von Rohsynthesegas zu Reingasen bewährt.

Ein siebter Aspekt des erfindungsgemäßen Verfahrens ist dadurch gekennzeichnet, dass die Kohlendioxid-Entfernungsvorrichtung als Gaswäsche ausgestaltet ist, wobei mindestens ein Waschmittel verwendet wird, das aus der nachfolgenden Gruppe ausgewählt ist: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether. Insbesondere nach einer CO-Konvertierungsstufe, die den Kohlendioxid-Gehalt im Synthesegas weiter erhöht, ist eine effektive Kohlendioxid-Entfernung erforderlich, da dieses die weitere Aufarbeitung des Synthesegases zu Reinwasserstoff stören würde.

Ein achter Aspekt des erfindungsgemäßen Verfahrens ist dadurch gekennzeichnet, dass dass die Wasserstoffreinigungsanlage eine Vorrichtung zur Druckwechseladsorption umfasst und dass mindestens ein brennbarer Abgasstrom aus der Vorrichtung zur Druckwechseladsorption ausgeleitet und mindestens teilweise dem Brenngas zugeben wird.

Auf diese Weise kann der Enthalpiegehalt dieses Nebenproduktstroms sinnvoll genutzt werden.

Ein neunter Aspekt des erfindungsgemäßen Verfahrens ist dadurch gekennzeichnet, dass die Rohgastemperatur zwischen 800 und 950 °C, bevorzugt zwischen 830 und 900 °C, meist bevorzugt zwischen 840 und 890 °C liegt. Untersuchungen haben gezeigt, dass innerhalb dieser Wertebereiche der Rohgastemperatur eine besonders effektive Absenkung der Exportdampfmenge mit der Erfindung möglich ist.

Ein zehnter Aspekt des erfindungsgemäßen Verfahrens ist dadurch gekennzeichnet, dass das Gesamt-S/C-Verhältnis zwischen 2,2 und 3,7, bevorzugt zwischen 2,5 und 3,5 liegt. Untersuchungen haben gezeigt, dass innerhalb dieser Wertebereiche des Gesamt-S/C-Verhältnisses eine besonders effektive Absenkung der Exportdampfmenge mit der Erfindung möglich ist.

Ein elfter Aspekt des erfindungsgemäßen Verfahrens ist dadurch gekennzeichnet, dass das Brenngas einen Trimmgasanteil aufweist, wobei der Trimmgasanteil den Heizwertanteil-Beitrag des Einsatzgases bezogen auf Gesamtheizwert des Brenngases darstellt und wobei der Trimmgasanteil zwischen größer Null und 20 %, bevorzugt zwischen 1 und 16 % liegt. Untersuchungen haben gezeigt, dass innerhalb dieser Wertebereiche des Trimmgasanteils eine besonders effektive Absenkung der Exportdampfmenge mit der Erfindung möglich ist.

Ein zwölfter Aspekt des erfindungsgemäßen Verfahrens ist dadurch gekennzeichnet, dass das Verhältnis von erzeugtem Exportdampf zu erzeugtem Wasserstoff zwischen 0 und 1 kg Dampf pro Normkubikmeter Wasserstoff, bevorzugt zwischen 0 und 0,4 kg Dampf pro Normkubikmeter Wasserstoff, meist bevorzugt zwischen 0 und 0,2 kg Dampf pro Normkubikmeter Wasserstoff liegt. Die genannten Exportdampfmengen können zumeist problemlos an externe Verbraucher abgegeben werden oder es wird in einem Beispiel keinerlei Exportdampf produziert. Die übrigen Verfahrensparameter werden daher so gewählt, dass diese Exportdampfmengen resultieren.

Ein dreizehnter Aspekt des erfindungsgemäßen Verfahrens ist dadurch gekennzeichnet, dass bezogen auf die Strömungsrichtung des Rauchgasstromes der mindestens eine Wärmetauscher zum Aufheizen der Verbrennungsluft im Rauchgas-Abhitzeteil des Reformerofens stromaufwärts der Position eines für die Überhitzung von Dampf vorgesehenen, weiteren Wärmetauschers und bevorzugt auch stromaufwärts der Position eines für die Vorwärmung des Einsatzgases vorgesehenen, weiteren Wärmetauschers angeordnet ist. Optimierungsrechnungen mittels Prozesssimulation haben gezeigt, dass auf diese Weise ein besonders günstiger Pinch-Punkt zur Gestaltung der Wärmeintegration des Gesamtverfahrens erhalten wird. Zusätzlich kann die Wärmetauscherfläche des entsprechenden Wärmetauscher-Coils besonders klein gestaltet werden.

Ein vierzehnter Aspekt des erfindungsgemäßen Verfahrens ist dadurch gekennzeichnet, dass die Leitung für die aufgeheizte Verbrennungsluft zwischen dem Wärmetauscher und den Brennern feuerfest ausgekleidet oder zugestellt ist, wobei mindestens ein thermisches Isoliermaterial verwendet wird, das aus der folgenden Gruppe ausgewählt ist: Feuerfeste Steine, feuerfeste Gießmasse oder Stampfmasse, Mineralfasermatten, selbsttragende Mineralfaser-Formkörper. Es kann weiterhin ein metallisches Innenrohr zur Führung der aufgeheizten Verbrennungsluft vorgesehen werden, das von dem thermischen Isoliermaterial umgeben ist, um auf diese Weise das thermische Isoliermaterial vor mechanischen Belastungen bei hohen Strömungsgeschwindigkeiten zu schützen.

Ein fünfzehnter Aspekt des erfindungsgemäßen Verfahrens ist dadurch gekennzeichnet, dass die Leitung für die aufgeheizte Verbrennungsluft zwischen dem Wärmetauscher und den Brennern so ausgestaltet wird, dass die Strömungsgeschwindigkeit der aufgeheizten Verbrennungsluft mindestens 30 m/s, bevorzugt mindestens 50 m/s beträgt. Auf diese Weise kann die isolierte Leitung für die aufgeheizte Verbrennungsluft besonders kostengünstig gestaltet werden, da kleinere Leitungsquerschnitte verwendet werden können und sich der technische Aufwand für die benötigte Rohrleitungs-Tragstruktur wegen des geringeren Gewichts ebenfalls reduziert. Bei diesen hohen Strömungsgeschwindigkeiten ist es zudem besonders günstig, ein metallisches Innenrohr zur Führung der aufgeheizten Verbrennungsluft vorzusehen, das von dem thermischen Isoliermaterial umgeben ist, um auf diese Weise das thermische Isoliermaterial vor mechanischen Belastungen bei hohen Strömungsgeschwindigkeiten zu schützen.

Ein sechzehnter Aspekt des erfindungsgemäßen Verfahrens ist dadurch gekennzeichnet, dass der mindestens eine Wärmetauscher zum Aufheizen der Verbrennungsluft mit einem regelbaren Bypass ausgestattet ist. Auf diese Weise kann die Exportdampfmenge über weite Bereiche der Wasserstoffproduktionskapazität des Verfahrens, typischerweise 40 bis 100 % der nominalen Wasserstoffproduktionskapazität, konstant gehalten werden. Dies ist insbesondere im Teillastbetrieb des Verfahrens sowie bei seiner Inbetriebnahme und Außerbetriebnahme vorteilhaft.

Ein siebzehnter Aspekt des erfindungsgemäßen Verfahrens ist dadurch gekennzeichnet, dass im Teillastbetrieb der Wasserstofferzeugungsanlage die Rohgastemperatur gegenüber derjenigen im Volllastbetrieb so abgesenkt wird und das Gesamt-S/C-Verhältnis im Teillastbetrieb der Wasserstofferzeugungsanlage gegenüber demjenigen im Volllastbetrieb so erhöht wird, dass die Absolutmenge des Exportdampfs im Teillastbetrieb gegenüber derjenigen im Volllastbetrieb konstant bleibt. Dieser Aspekt erbringt weitere Vorteile hinsichtlich der Abgabe einer konstanten Exportdampfmenge an externe Verbraucher im Teillastbetrieb des Verfahrens. Dabei ist es besonders günstig, die Vorwärmtemperatur der Verbrennungsluft so zu wählen, dass sie in der Nähe der Obergrenze der genannten Zahlenbereiche liegt, beispielsweise bei 700 und 790 °C, bevorzugt zwischen 710 und 760 °C, meist bevorzugt zwischen 750 und 755 °C. Besonders große Vorteile können zusätzlich bei einer Kombination dieses Aspekts mit dem sechzehnten Aspekt des erfindungsgemäßen Verfahrens erzielt werden, nach dem der mindestens eine Wärmetauscher zum Aufheizen der Verbrennungsluft mit einem regelbaren Bypass ausgestattet ist.

Ein weiterer Aspekt des erfindungsgemäßen Verfahrens ist dadurch gekennzeichnet, dass das gesamte Prozesskondensat ohne Einschränkungen in das Dampfreformierungsverfahren zurückgeführt wird. Dabei wird das Prozesskondensat, dass durch die in der Regel mehrstufige Abkühlung des Rohsynthesegases erhalten wird, in einem separaten Prozessdampfsystem geführt. Das Exportdampfsystem ist dabei vollständig vom Prozesskondensat- und Prozessdampfsystem getrennt, so dass Exportdampf höchster Qualität erzeugt werden kann, der für Dampfturbinen vom Kondensationstyp geeignet ist. Bei niedrigen Verhältnissen von Exportdampf zu Reinwasserstoff steht mehr Enthalpie für die vollständige Verdampfung des Prozesskondensats zur Verfügung, das ansonsten bei unvollständiger Verdampfung als flüssiger Abfallstrom aus dem Verfahren ausgeleitet und entsorgt werden müsste.

Ein weiterer Aspekt des erfindungsgemäßen Verfahrens ist dadurch gekennzeichnet, dass eine vorteilhafte Kombination mit CO-Konvertierungsverfahren möglich ist, die weniger Dampfeinsatz erfordern als konventionelle CO-Konvertierungsverfahren. Als Beispiel hierfür kann die Mitteltemperatur-CO-Konvertierung (MT-Shift) im Vergleich zur Hochtemperatur-CO-Konvertierung (HT-Shift) genannt werden. Durch die Kombination des erfindungsgemäßen Verfahrens mit einem CO-Konvertierungsverfahren mit geringerem Dampfeinsatz verbessert sich der energetische Wirkungsgrad des Gesamtverfahrens zusätzlich. Eine weitere Verbesserung des energetischen Wirkungsgrads des Gesamtverfahrens wird zudem erhalten, wenn der Prereformer zweistufig ausgestaltet wird, da durch die zweistufige Vorspaltung bzw. Vorreformierung des Einsatzgases niedrigere Dampf-zu-Kohlenstoff-Verhältnisse im Einsatzgasgemisch möglich sind als bei lediglich einstufigem Prereformer. Das Verhältnis von erzeugtem Exportdampf zu erzeugtem Wasserstoff kann mit dieser Konfiguration auf Null reduziert werden.

Ein weiterer Aspekt des erfindungsgemäßen Verfahrens ist dadurch gekennzeichnet, dass zusätzlich eine zusätzlich eine Technologie zur Minderung des Gehalts an Stickstoffoxiden (NOₓ) im Brennerrauchgas verwendet wird, da höhere Luftvorwärmtemperaturen die Stickstoffoxid-Bildung erhöhen. Es können gebräuchliche Vorrichtungen und Verfahren zur NOₓ-Minderung verwendet werden, beispielsweise Ultra-Low-NOₓ-Brenner sowie die katalytische (SCR) oder nichtkatalytische (SNCR) NOₓ-Reduktion durch Injektion entsprechender Reduktionsmittel wie Ammoniak oder Harnstoff.

### Ausführungsbeispiel

Weiterbildungen, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: ein Beispiel des Reformerofens und des Rauchgas-Abhitzeteils eines Verfahrens zum Herstellen von Reinwasserstoff durch Dampfreformierung gemäß des Stands der Technik,
- Fig. 2: ein Beispiel des Reformerofens und des Rauchgas-Abhitzeteils eines Verfahrens zum Herstellen von Reinwasserstoff durch Dampfreformierung gemäß der Erfindung.

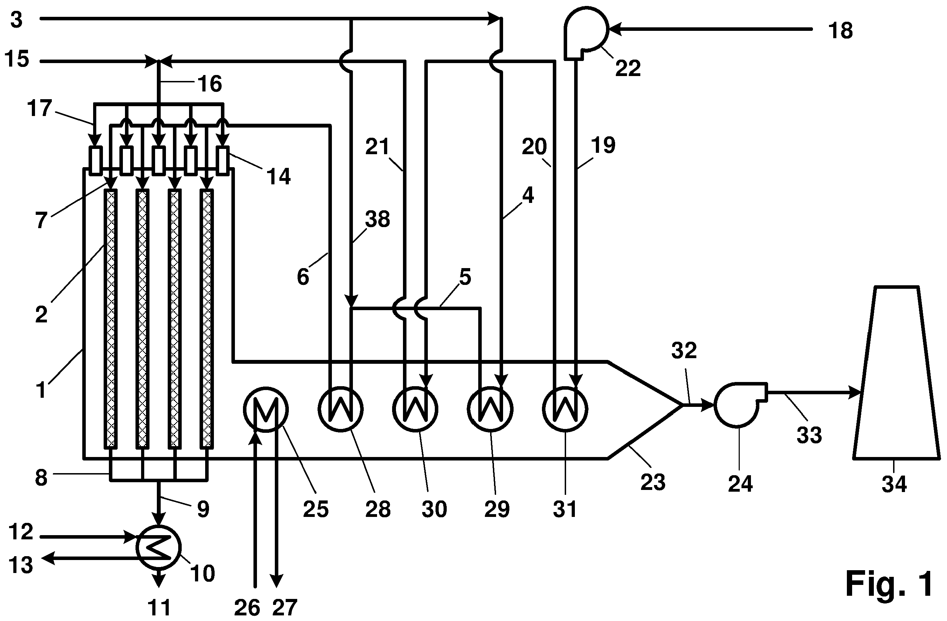

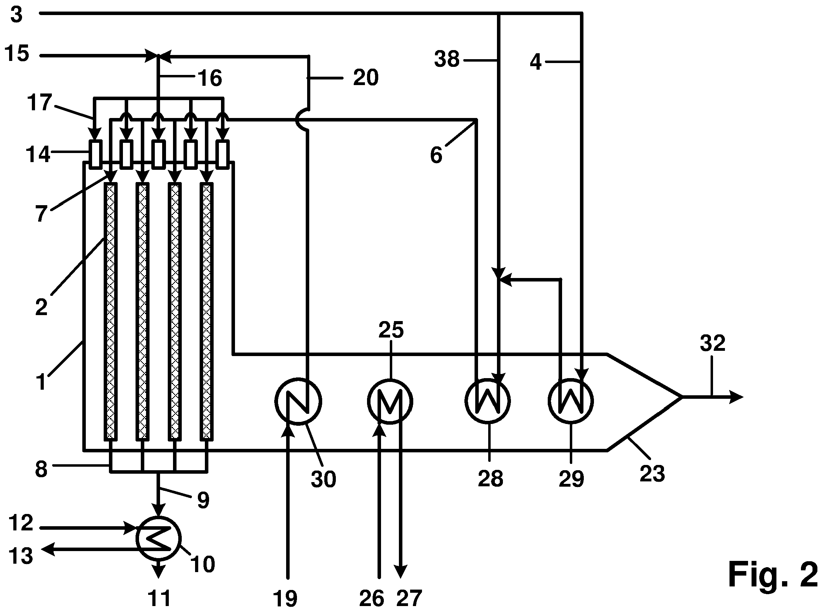

Fig. 1 zeigt ein Beispiel eines Verfahrens bzw. einer Anlage zum Herstellen von Synthesegas durch Dampfreformierung gemäß des Stands der Technik. Ein Reformerofen 1 einer Hauptreformierungsstufe enthält eine Vielzahl von mit Katalysator gefüllten Reformerrohren 2, wobei aus Übersichtlichkeitsgründen in Fig. 1 nur vier Reformerrohre dargestellt werden. Der in diesen verwendete Katalysator ist ein Nickel-basierter, kommerziell erhältlicher Dampfreformierungskatalysator. Über Leitungen 3, 4, 5, 6, 7 und 38 werden die Reformerrohre mit vorerhitztem, kohlenwasserstoffhaltigem Erdgas als Reformer-Einsatzgas beschickt, das zuvor in einer Entschwefelungsstufe entschwefelt und in einem zweistufigen Prereformer vorreformiert wurde (beides bildlich nicht gezeigt in Fig. 1 und Fig. 2). Die Eintrittstemperatur des entschwefelten und vorreformierten Reformer-Einsatzgases in die Reformerrohre beträgt beispielsweise 500 °C.

Ferner wird vor Eintreten des Reformereinsatzes in den Reformer diesem Dampf beigemischt (nicht gezeigt in Fig. 1), so dass ein definiertes Dampf/Kohlenstoffverhältnis (S/C-Verhältnis) zwischen 2,2 und 3,7, bevorzugt zwischen 2,5 und 3,5, in einem Beispiel von 3 mol/mol vorliegt. Da bereits im Prereformer, beispielsweise in jeder Prereformer-Stufe separat, Dampf zum Einsatzgas zugegeben wurde, wird das Dampf/Kohlenstoffverhältnis zumeist als Gesamt-S/C-Verhältnis angegeben, das sich demnach auf die Gesamtmenge zugegebenen Dampfs zum Einsatzgas bezieht.

Nach Umsetzen des Einsatzgases in den Reformerrohren wird das Wasserstoff, CO und nicht umgesetzte Erdgasbestandteile enthaltende, gasförmige Rohsynthesegas als Reformerprodukt über Leitungen 8 und Sammelleitung 9 abgezogen und in einem Wärmetauscher 10 abgekühlt, wobei ein abgekühltes Reformerprodukt erhalten und über Leitung 11 abgezogen und mindestens einem weiteren, bildlich nicht gezeigten Reinigungs-, Konditionierungs- oder Verarbeitungsschritt zugeführt wird. Im Falle der Herstellung von Reinwasserstoff aus dem Rohsynthesegas umfassen die weiteren Reinigungs-, Konditionierungs- oder Verarbeitungsschritte oft die CO-Konvertierung zur Erhöhung des Wasserstoffanteils des Synthesegases sowie eine zumeist mehrstufige Wasserstoffreinigungsanlage, wobei die Wasserstoffreinigungsanlage mindestens eine der folgenden Vorrichtungen umfasst: Kohlendioxid-Entfernungsvorrichtung, Vorrichtung zur kryogenen Gaszerlegung, Vorrichtung zur Druckwechseladsorption (PSA). Die hierfür anzuwendenden Verfahrensbedingungen sind dem Fachmann an sich bekannt. Bei dem Betrieb der Wasserstoffreinigungsanlage bzw. den in dieser enthaltenen Vorrichtungen, insbesondere der Vorrichtung zur Druckwechseladsorption, werden ein oder mehrere brennbare Gasströme als Nebenprodukte erhalten, die mindestens teilweise zu einer Vielzahl von Brennern 14 im Reformerofen zurückgeführt und dort zur Wärmeerzeugung verbrannt werden. Zur Beheizung der Reformerrohre im Reformerofen wird zumeist zusätzlich auch ein Anteil des Einsatzgases als Brenngas in den Brennern 14 zur Wärmeerzeugung verbrannt (bildlich nicht gezeigt). Der Anteil dieses sogenannten Trimmgases entspricht dem Heizwertanteil-Beitrag des Einsatzgases bezogen auf Gesamtheizwert des Brenngases. Er entspricht auch dem Anteil des Mengenstroms des Einsatzgases bezogen auf den Gesamtmengenstrom des Brenngas, korrigiert um die jeweiligen Heizwerte.

Die Abkühlung des aus dem Reformerofen ausgeleiteten Rohsynthesegases erfolgt beispielhaft im indirekten Wärmetausch gegen einen über Leitung 12 herangeführten Wasserstrom, aus dem durch Verdampfen in einem Wärmetauscher 10 ein Dampfstrom erhalten wird, der über Leitung 13 ausgeleitet wird. Der Wasserstrom kann dabei Frischwasser oder Kesselspeisewasser oder wässriges Prozesskondensat umfassen, das bei der weiteren Abkühlung des Rohsynthesegases gewonnen wird.

Die Reformerrohre werden mittels der Vielzahl von Brennern 14 befeuert, die an der Oberseite des Reformerofens angebracht sind und den Zwischenraum zwischen den Reformerrohren befeuern. Bevorzugt sind die Reformerrohre in dem Reformerofen in Reihen angeordnet und dass die Brenner zwischen den Reformerrohr-Reihen und/oder zwischen den äußeren Reformerrohr-Reihen und den Innenwänden des Reformerofens angeordnet, wobei die Brenner so ausgerichtet sind, dass die Längsachse mindestens eines Teils der Brennerflammen parallel zur Längsachse der Reformerrohre verläuft.

Aus Übersichtlichkeitsgründen werden in der Figur nur fünf Brenner dargestellt. Im vorliegenden Beispiel werden die Brenner 14 mit einer Mischung rückgeführten PSA-Abgases und Erdgas-Einsatzgas als Brenngas betrieben, das über Leitungen 15, 16 und Verteilungsleitungen 17 den Brennern zugeführt wird. Die Verbrennungsluft wird über Leitungen 18, 19, 20 und 21 herangeführt, mittels Wärmetauschern 30, 31 vorgewärmt und dem Brennstoff in Leitung 16 zugemischt. Zur Förderung der Verbrennungsluft dient ein Gebläse 22.

Im Reformerofen 1 erfolgt der Wärmeübergang auf die Reformerrohre durch Wärmestrahlung und konvektive Wärmeübertragung der heißen Rauchgase. Nach erfolgter Wärmeübertragung treten die Rauchgase in einen Abhitzeteil 23 des Reformerofens 1 ein. Die Förderung der Rauchgase durch den Abhitzeteil des Reformerofens erfolgt im Saugzug eines Gebläses 24, das über eine Leitung 32 mit dem Abhitzeteil verbunden ist.

Im Abhitzeteil des Reformerofens erfolgt die weitere Abkühlung der Rauchgase durch mehrere Wärmetauscher im Rauchgasweg, wobei die Enthalpie der Rauchgase zur Erzeugung eines oder mehrerer weiterer Dampfströme sowie zur mehrstufigen Vorwärmung des Reformereinsatzes und der Verbrennungsluft genutzt wird. Gemäß des Stands der Technik wird dabei die Verbrennungsluft auf Temperaturen von beispielsweise kleiner als 530 °C vorgewärmt.

Bezüglich der Dampferzeugung ist in Fig. 1 exemplarisch ein Wärmetauscher 25 als strömungsmäßig erster Wärmetauscher im Rauchgasweg dargestellt, in dem die heißen Rauchgase im indirekten Wärmetausch gegen einen über Leitung 26 herangeführten Wasserstrom gekühlt werden, wobei ein Dampfstrom erzeugt wird, der über Leitung 27 ausgeleitet und der weiteren Nutzung oder dem Export an externe Verbraucher zugeleitet wird. Alternativ kann die Abkühlung der Rauchgase im Wärmetauscher 25 gegen einen Dampfstrom erfolgen, wobei dann über Leitung 27 überhitzter Dampf abgezogen wird.

Nach Passieren der zur Vorwärmung des Reformereinsatzes und der Verbrennungsluft dienenden Wärmetauscher 28 bis 31 verlassen die abgekühlten Rauchgase über Leitung 32 den Abhitzeteil des Reformerofens und werden mittels des Gebläses 24 über Leitung 33 einer Rauchgasentsorgung 34 zugeführt.

Fig. 2 zeigt ein Beispiel des Reformerofens und des Rauchgas-Abhitzeteils eines Verfahrens zum Herstellen von Reinwasserstoff durch Dampfreformierung gemäß der Erfindung. Gleiche Bezugszeichen entsprechen dabei gleichen strukturellen Verfahrens- und Vorrichtungselementen, sofern es nicht im Einzelfall anders erwähnt wird. Aus Vereinfachungsgründen in Fig. 2 nicht gezeigt, aber trotzdem im Beispiel vorhanden sind die Leitung 18 und das Gebläse 22 für die Zuleitung der Verbrennungsluft sowie die Vorrichtungselemente stromabwärts der Leitung 32 zum Ausleiten und Entsorgen des Rauchgases aus dem Abhitzeteil 23. Ebenfalls nicht gezeigt, aber trotzdem im Beispiel vorhanden sind alle Vorrichtungselemente, die im Zusammenhang mit Fig. 1 erörtert, aber nicht in dieser bildlich dargestellt wurden.

Zur Vorwärmung der Verbrennungsluft dient im Beispiel der Fig. 2 nunmehr ein Wärmetauscher 30, dem über eine Leitung 19 Verbrennungsluft aus der Umgebung zugeführt wird. Der Wärmetauscher 30 befindet sich im gezeigten Beispiel stromaufwärts der Positionen der weiteren Wärmetauscher im Rauchgas-Abhitzeteil. Optimierungsrechnungen mittels Prozesssimulation haben gezeigt, dass auf diese Weise ein besonders günstiger Pinch-Punkt zur Gestaltung der Wärmeintegration des Gesamtverfahrens erhalten wird. Zusätzlich kann die Wärmetauscherfläche des entsprechenden Wärmetauscher-Coils besonders klein gestaltet werden. Die Verbrennungsluft wird mittels Wärmetauscher 30 im indirekten Wärmetausch mit dem heißen Rauchgas auf eine Temperatur zwischen 530 und 790 °C, bevorzugt zwischen 540 und 760 °C, meist bevorzugt zwischen 550 und 755 °C aufgeheizt und sodann über Leitungen 20, 16 und 17 den Brennern 14 des Reformerofens zugeführt.

Der Wärmetauscher 30 kann in einem Beispiel auch mehrere einzelne Wärmetauscher umfassen, die alle im Rauchgas-Abhitzeteil des Reformerofens angeordnet sind und zum Aufheizen der Verbrennungsluft im indirekten Wärmetausch mit dem heißen Rauchgas dienen. In einem Beispiel befindet sich dabei mindestens einer der einzelnen Wärmetauscher stromaufwärts der Positionen der weiteren Wärmetauscher im Rauchgas-Abhitzeteil, in einem Beispiel stromaufwärts der Positionen aller weiteren Wärmetauscher im Rauchgas-Abhitzeteil.

### Zahlenbeispiel

Eine Dampfreformierungsanlage wurde mit Vorwärmtemperaturen der Verbrennungsluft von 515 °C (Stand der Technik, Vergleichsbeispiel, Vgl.) und 750 °C (Erfindung, Erf.) betrieben. Die dabei erhaltenen Verhältnisse von erzeugtem Exportdampf zu erzeugtem Wasserstoff sowie übrige wichtige Betriebsgrößen werden für drei Sätze unterschiedlicher Betriebsparameter in den nachfolgenden Tabellen zusammengestellt. In einem Beispiel wurde der Kohlenwasserstoff-Einsatz in einem zweistufigen statt einstufigen Prereformer vorreformiert, wobei die Eintrittstemperatur in die zweiter Prereformer-Stufe bei 650 °C lag.

In allen erfindungsgemäßen Beispielen konnte das Verhältnis von erzeugtem Exportdampf zu erzeugtem Wasserstoff auf Null reduziert werden. Insbesondere im Beispiel mit zweistufigem Prereformer war dies möglich, obwohl die Rohgastemperatur und das Gesamt-S/C-Verhältnis konstant gehalten wurden.

### Bezugszeichenliste

- [1]: Reformerofen
- [2]: Reformerrohre
- [3] - [9]: Leitung
- [10]: Wärmetauscher
- [11] - [13]: Leitung
- [14]: Brenner
- [15] - [21]: Leitung
- [22]: Gebläse
- [23]: Abhitzeteil
- [24]: Gebläse
- [25]: Wärmetauscher
- [26]: Leitung
- [27]: Leitung
- [28]: Wärmetauscher
- [29]: Wärmetauscher
- [30]: Wärmetauscher
- [31]: Wärmetauscher
- [32]: Leitung
- [33]: Leitung
- [34]: Rauchgasentsorgung
- [38]: Leitung

| **Parameter** | **Vgl.** | **Erf.** |
|---|---|---|
| Dampfexport/H2, kg/Nm3 (1) | 0.4 | 0.2 |
| Rohgastemperatur, °C | 872 | 900 |
| Gesamt-S/C-Verhältnis | 2.9 | 2.5 |
| Anzahl Stufen Prereformer | 1 | 1 |
| Vorwärmtemperatur Luft, °C | 515 | 750 |
| Anteil Trimmgas, % (2) | 15 | 4 |

| **Parameter** | **Vgl.** | **Erf.** |
|---|---|---|
| Dampfexport/H2, kg/Nm3 (1) | 0.2 | 0.0 |
| Rohgastemperatur, °C | 847 | 867 |
| Gesamt-S/C-Verhältnis | 3.4 | 3.3 |
| Anzahl Stufen Prereformer | 1 | 1 |
| Vorwärmtemperatur Luft, °C | 515 | 750 |
| Anteil Trimmgas, % (2) | 13 | 12 |

| **Parameter** | **Vgl.** | **Erf.** |
|---|---|---|
| Dampfexport/H2, kg/Nm3 (1) | 0.3 | 0.0 |
| Rohgastemperatur, °C | 885 | 885 |
| Gesamt-S/C-Verhältnis | 3.1 | 3.1 |
| Anzahl Stufen Prereformer (3) | 2 | 2 |
| Vorwärmtemperatur Luft, °C | 515 | 750 |
| Anteil Trimmgas, % (2) | 25 | 15 |

### Erläuterungen

(1) Dampfexport (kg/h) / Wasserstoff-Produktion (Nm3/h)
(2) % Brenngas-Heizwert bzw. Brennerleistung im Reformerofen durch Trimmgas (Kohlenwasserstoff-Einsatzgas). Restlicher Heizwert bzw. restliche Brennerleistung durch rückgeführtes PSA-Abgas.
(3) Eintrittstemperatur der zweiten Prereformer-Stufe: 650 °C

## Patentansprüche

1. Verfahren zum Herstellen eines Reinwasserstoff-Produktgases durch Dampfreformieren eines Kohlenwasserstoffe enthaltenden Einsatzgases, bevorzugt Erdgas und/ oder Naphtha, umfassend folgende Schritte:
(a) Bereitstellen des Kohlenwasserstoffe enthaltenden Einsatzgases,
(b) Bereitstellen einer Wasserstofferzeugungsanlage, umfassend
(b1) einen Prereformer,
(b2) eine Dampfreformierungsanlage mit einem Reformerofen, umfassend
(b21) eine Vielzahl von mit Dampfreformierungskatalysator gefüllten Reformerrohren, wobei die Reformerrohre einen Einsatzgas-Eingang für ein Einsatzgasgemisch auf einer ersten Seite des Reformerofens und einen Produktgas-Ausgang für ein Rohsynthesegas auf einer zweiten Seite des Reformerofens aufweisen, wobei die zweite Seite der ersten Seite gegenüber liegt, und ferner umfassend
(b22) eine Vielzahl von Brennern,
(b3) eine CO-Konvertierungsanlage,
(b4) eine Wasserstoffreinigungsanlage,
(c) Zugeben von Dampf zu dem Einsatzgas, wobei ein Dampf-Einsatzgas-Gemisch erhalten wird, das ein Gesamt-S/C-Verhältnis aufweist,
(d) Einleiten des Dampf-Einsatzgas-Gemischs in den Prereformer, Vorreformieren des Dampf-Einsatzgas-Gemischs unter Vorreformierungsbedingungen zu einem Wasserstoff, Kohlenoxide, Methan und höhere Kohlenwasserstoffe enthaltenden, vorreformierten Einsatzgas, Ausleiten des vorreformierten Einsatzgases,
(e) Einleiten des vorreformierten Einsatzgases in den Einsatzgas-Eingang der Reformerrohre der Dampfreformierungsanlage, Beheizen der Reformerrohre mittels der Brenner, wobei die Brenner betrieben werden mit einem Brenngas, das einen Anteil des Einsatzgases als Trimmgas und einen Anteil eines rückgeführten, brennbaren Abgasstroms enthält, und mit Verbrennungsluft, wobei beim Betrieb der Brenner ein heißes Rauchgas erzeugt wird,
(f) Dampfreformieren des vorreformierten Einsatzgases unter Dampfreformierungsbedingungen zu einem Wasserstoff, Kohlenoxide und nicht umgesetzte Kohlenwasserstoffe enthaltenden Rohsynthesegas, das eine Rohgastemperatur aufweist, Ausleiten des Rohsynthesegases aus dem Produktgas-Ausgang der Reformerrohre,
(g) Einleiten des Rohsynthesegases in die CO-Konvertierungsanlage, Durchführung der CO-Konvertierung unter CO-Konvertierungsbedingungen, Ausleiten eines konvertierten Rohsynthesegases, das in Bezug auf das Rohsynthesegas einen erhöhten Wasserstoffgehalt aufweist,
(h) Einleiten des konvertierten Rohsynthesegases in die Wasserstoffreinigungsanlage, Ausleiten eines Reinwasserstoff-Produktgases und mindestens eines brennbaren Abgasstromes, wobei
(i) die Verbrennungsluft vor Einleiten in die Brenner mittels mindestens eines Wärmetauschers im indirekten Wärmetausch mit dem heißen Rauchgas auf eine Temperatur zwischen 530 und 790 °C, bevorzugt zwischen 540 und 760 °C, meist bevorzugt zwischen 550 und 755 °C aufgeheizt wird.

2. Verfahren nach Anspruch 1, **dadurch gekennzeichnet, dass** der Prereformer zwei Vorreformierungsstufen umfasst, wobei die einzelnen Stufen als Schachtreaktoren ausgestaltet sind, die mit einem für die Vorreformierung aktiven, festen Katalysator befüllt sind.

3. Verfahren nach Anspruch 1 oder 2, **dadurch gekennzeichnet, dass** die Reformerrohre in dem Reformerofen in Reihen angeordnet sind und dass die Brenner zwischen den Reformerrohr-Reihen und/oder zwischen den äußeren Reformerrohr-Reihen und den Innenwänden des Reformerofens angeordnet sind, wobei die Brenner so ausgerichtet sind, dass die Längsachse mindestens eines Teils der Brennerflammen parallel zur Längsachse der Reformerrohre verläuft.

4. Verfahren nach einem der vorigen Ansprüche, **dadurch gekennzeichnet, dass** die Reformerrohre keine Wärmerückgewinnungsvorrichtung, insbesondere keinen internen Wärmetauscher umfassen und im geraden Durchgang von dem vorreformierten Einsatzgas durchströmt werden.

5. Verfahren nach einem der vorigen Ansprüche, **dadurch gekennzeichnet, dass** die Wasserstofferzeugungsanlage eine Entschwefelungsstufe umfasst.

6. Verfahren nach einem der vorigen Ansprüche, **dadurch gekennzeichnet, dass** die Wasserstoffreinigungsanlage mindestens eine Vorrichtung umfasst, die aus der folgenden Gruppe ausgewählt ist:
- Kohlendioxid-Entfernungsvorrichtung
- Vorrichtung zur kryogenen Gaszerlegung
- Vorrichtung zur Druckwechseladsorption (PSA)

7. Verfahren nach Anspruch 6, **dadurch gekennzeichnet, dass** die Kohlendioxid-Entfernungsvorrichtung als Gaswäsche ausgestaltet ist, wobei mindestens ein Waschmittel verwendet wird, das aus der nachfolgenden Gruppe ausgewählt ist:
Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether.

8. Verfahren nach einem der vorigen Ansprüche, **dadurch gekennzeichnet, dass** die Wasserstoffreinigungsanlage eine Vorrichtung zur Druckwechseladsorption umfasst und dass mindestens ein brennbarer Abgasstrom aus der Vorrichtung zur Druckwechseladsorption ausgeleitet und mindestens teilweise dem Brenngas zugeben wird.

9. Verfahren nach einem der vorigen Ansprüche, **dadurch gekennzeichnet, dass** die Rohgastemperatur zwischen 800 und 950 °C, bevorzugt zwischen 830 und 900 °C, meist bevorzugt zwischen 840 und 890 °C liegt.

10. Verfahren nach einem der vorigen Ansprüche, **dadurch gekennzeichnet, dass** das Gesamt-S/C-Verhältnis zwischen 2,2 und 3,7, bevorzugt zwischen 2,5 und 3,5 liegt.

11. Verfahren nach einem der vorigen Ansprüche, **dadurch gekennzeichnet, dass** das Brenngas einen Trimmgasanteil aufweist, wobei der Trimmgasanteil den Heizwertanteil-Beitrag des Einsatzgases bezogen auf Gesamtheizwert des Brenngases darstellt und wobei der Trimmgasanteil zwischen größer Null und 20 %, bevorzugt zwischen 1 und 16 % liegt.

12. Verfahren nach einem der vorigen Ansprüche, **dadurch gekennzeichnet, dass** das Verhältnis von erzeugtem Exportdampf zu erzeugtem Wasserstoff zwischen 0 und 1 kg Dampf pro Normkubikmeter Wasserstoff, bevorzugt zwischen 0 und 0,4 kg Dampf pro Normkubikmeter Wasserstoff, meist bevorzugt zwischen 0 und 0,2 kg Dampf pro Normkubikmeter Wasserstoff liegt.

13. Verfahren nach einem der vorigen Ansprüche, **dadurch gekennzeichnet, dass** bezogen auf die Strömungsrichtung des Rauchgasstromes der mindestens eine Wärmetauscher zum Aufheizen der Verbrennungsluft stromaufwärts der Position eines für die Überhitzung von Dampf vorgesehenen, weiteren Wärmetauschers und bevorzugt auch stromaufwärts der Position eines für die Vorwärmung des Einsatzgases vorgesehenen, weiteren Wärmetauschers angeordnet ist.

14. Verfahren nach einem der vorigen Ansprüche, **dadurch gekennzeichnet, dass** die Leitung für die aufgeheizte Verbrennungsluft zwischen dem Wärmetauscher und den Brennern feuerfest ausgekleidet oder zugestellt ist, wobei mindestens ein thermisches Isoliermaterial verwendet wird, das aus der folgenden Gruppe ausgewählt ist: Feuerfeste Steine, feuerfeste Gießmasse oder Stampfmasse, Mineralfasermatten, selbsttragende Mineralfaser-Formkörper.

15. Verfahren nach einem der vorigen Ansprüche, **dadurch gekennzeichnet, dass** die Leitung für die aufgeheizte Verbrennungsluft zwischen dem Wärmetauscher und den Brennern so ausgestaltet wird, dass die Strömungsgeschwindigkeit der aufgeheizten Verbrennungsluft mindestens 30 m/s, bevorzugt mindestens 50 m/s beträgt.

16. Verfahren nach einem der vorigen Ansprüche, **dadurch gekennzeichnet, dass** der mindestens eine Wärmetauscher zum Aufheizen der Verbrennungsluft mit einem regelbaren Bypass ausgestattet ist.

17. Verfahren nach einem der vorigen Ansprüche, **dadurch gekennzeichnet, dass** im Teillastbetrieb der Wasserstofferzeugungsanlage die Rohgastemperatur gegenüber derjenigen im Volllastbetrieb so abgesenkt wird und das Gesamt-S/C-Verhältnis im Teillastbetrieb der Wasserstofferzeugungsanlage gegenüber demjenigen im Volllastbetrieb so erhöht wird, dass die Absolutmenge des Exportdampfs im Teillastbetrieb gegenüber derjenigen im Volllastbetrieb konstant bleibt.
